# EUROPÄISCHE PATENTANMELDUNG

(11) **EP 2 886 025 A1**
(43) Veröffentlichungstag der Anmeldung: **24.06.2015**
(21) Anmeldenummer: 14198943.4
(22) Anmeldetag: 18.12.2014
(51) Int. Cl.: A47J 41/00, A23C 9/12

(54) **Joghurt-Bereiter**

(30) Priorität: 18.12.2013 DE 102013114292
(71) Anmelder: PM-International AG, 1618 Luxembourg (LU)
(72) Erfinder: Sorg, Rolf, 5444 Schengen (LU)
(74) Vertreter: Zech, Stefan Markus

(57) **Zusammenfassung**

Joghurt-Bereiter umfassend ein Außengehäuse (11) sowie ein darin aufnehmbares Innenbehältnis (22), wobei das Außengehäuse (11) ein zylindrisches, topfförmiges, unteres Gehäuseteil (12) mit einem Bodenabschnitt (13) und einem Wandabschnitt (14) sowie einen Gehäusedeckel (15) umfasst und eine durch die zylindrische Grundform des unteren Gehäuseteils (12) vorgegebene Vorzugsachse A definiert ist, wobei das Außengehäuse (11) und/oder der Gehäusedeckel (15) zu Isolationszwecken doppelwandig ausgebildet sind und dass sowohl am unteren Gehäuseteil (12) als auch am Gehäusedeckel (15) korrespondierende Verschlussmittel (18, 19; 20, 21) angeordnet sind, die ein Festlegen bzw. Öffnen des Gehäusedeckels (15) derart gestatten, dass der Gehäusedeckel (15) bei einer Beaufschlagung mit einer Zugkraft parallel zur Vorzugsachse A geschlossen bleibt.

## Beschreibung

Die Erfindung betrifft einen Joghurt-Bereiter umfassend ein Außengehäuse sowie ein darin aufnehmbares Innenbehältnis, wobei das Außengehäuse ein zylindrisches, topfförmiges, unteres Gehäuseteil mit einem Bodenabschnitt und einem Wandabschnitt sowie einen Gehäusedeckel umfasst und eine durch die zylindrische Grundform des unteren Gehäuseteils vorgegebene Vorzugsweise A definiert ist und wobei das Außengehäuse und/oder der Gehäusedeckel zu Isolationszwecken doppelwandig ausgebildet sind.

Derartige Joghurt-Bereiter werden eingesetzt, um zu privaten Zwecken selbst Joghurt zu bereiten. Für diesen Zweck wird ein Molkepulver mit Kulturen zur Herstellung eines Joghurts mit Milch vermischt und diese Mischung im dafür vorgesehenen Innenbehältnis in das Außengehäuse des Joghurt-Bereiters eingesetzt. Zwischen Innengehäuse und Außengehäuse wird sodann ein heißes Fluid, insbesondere kochendes Wasser eingefüllt und das Außengehäuse mittels eines Gehäusedeckels verschlossen. Danach wird das Außengehäuse für eine vorgegebene Reifezeit von beispielsweise 10 h verschlossen gehalten. Über die vom heißen Fluid bereitgestellte Wärme bewirken die Kulturen eine Umsetzung der Milch in Joghurt.

Bei einem bekannten Joghurt-Bereiter wurde der Deckel lediglich reibschlüssig über einen entsprechenden Stufenfalz in die Ausnehmung des Außenbehältnisses eingesetzt. Diese Ausbildung des Joghurt-Bereiters hatte zwei Nachteile: Zum einen war eine ausreichende Isolation nicht bzw. nicht immer gegeben mit der Folge, dass die Kulturen unter Umständen die Milch nur unvollständig in Joghurt umsetzten; zum anderen war das Aufsetzen bzw. Öffnen des Gehäusedeckels wegen des auch zu Isolationszwecken erforderlichen Reibschlusses nicht immer einfach und im Zusammenhang mit der Verwendung von kochendem Wasser auch nicht ganz ungefährlich.

Die Aufgabe der vorliegenden Erfindung besteht demgegenüber darin, einen Joghurt-Bereiter vorzuschlagen, der sich einerseits einfach öffnen und verschließen lässt und bei dem andererseits definierte Wärmeisolationseigenschaften im verschlossenen Zustand gegeben sind.

Diese Aufgabe wird mit einem Joghurt-Bereiter nach den Merkmalen des Anspruchs 1 gelöst. Konkret wird ein Joghurt-Bereiter vorgeschlagen, umfassend ein Außengehäuse sowie ein darin aufnehmbares Innenbehältnis, wobei das Außengehäuse ein zylindrisches, topfförmiges, unteres Gehäuseteil mit einem Bodenabschnitt sowie und einem Wandabschnitt sowie einen Gehäusedeckel umfasst und eine durch die zylindrische Grundform des unteren Gehäuseteils vorgegebene Vorzugsachse A definiert ist, wobei das Außengehäuse und/oder der Gehäusedeckel zu Isolationszwecken doppelwandig ausgebildet sind und wobei sowohl am unteren Gehäuseteil als auch am Gehäusedeckel korrespondierende Verschlussmittel angeordnet sind, die ein Festlegen bzw. Öffnen des Gehäusedeckels derart gestatten, dass der Gehäusedeckel bei einer Beaufschlagung mit einer Zugkraft parallel zur Vorzugsachse A geschlossen bleibt.

Nach einer Kernüberlegung der vorliegenden Erfindung sind insofern sowohl am unteren Gehäuseteil als auch am Gehäusedeckel korrespondierende Verschlussmittel angeordnet, die ein Festlegen bzw. Öffnen des Gehäusedeckels derart gestatten, dass die Gehäusedeckel bei einer Beaufschlagung mit einer Zugkraft parallel zur Vorzugsachse A geschlossen bleibt. Insofern ist ein einfaches "Abziehen" des Deckels nicht mehr möglich. Konkret können die zwischen unterem Gehäuseteil und Gehäusedeckel wirksamen Verschlussmittel beispielsweise als Schraubgewinde oder als Bajonettverschluss ausgebildet sein. In beiden Fällen ist die Beaufschlagung eines Drehmoments auf dem Gehäusedeckel bzw. das untere Gehäuseteil erforderlich, um den Gehäusedeckel vollständig in Verschlussposition zu überführen bzw. von einer vollständigen Verschlussposition zumindest in eine Zwischenposition zu überführen. Hierdurch sind die aufzuwendenden Kräfte, um eine gute Isolierung zwischen unterem Gehäuseteil und Gehäusedeckel bereitzustellen bzw. den Gehäusedeckel vom unteren Gehäuseteil zu lösen, wesentlich geringer als bei der aus dem Stand der Technik bekannten reibschlüssigen Lösung.

Bei der Ausführungsform, bei der ein Schraubgewinde zum Einsatz gelangt, kann das Außengewinde am unteren Gehäuseteil sowie ein korrespondierendes Innengewinde am Gehäusedeckel vorgesehen werden. Alternativ ist es aber auch möglich, ein Außengewinde am Gehäusedeckel und ein korrespondierendes Innengewinde am unteren Gehäuseteil vorzusehen.

In ähnlicher Weise ist es bei der Ausgestaltungsvariante, bei der ein Bajonettverschluss zum Einsatz gelangt, denkbar, Zapfen am Gehäusedeckel vorzusehen, die in Führungsausnehmungen am unteren Gehäuseteil eingreifen. Alternativ ist es denkbar, Zapfen am unteren Gehäuseteil vorzusehen, die in Führungsausnehmungen am Gehäusedeckel eingreifen.

Hinsichtlich der Ausrichtung der Zapfen sowie der Flächen, in denen Führungsausnehmungen ausgebildet sind, sind ebenfalls mehrere Varianten denkbar. So können die Zapfen beispielsweise parallel zur Vorzugsachse A verlaufend ausgerichtet sein und die Zapfen mit ersten Hinterschneidungen in Führungsausnehmungen mit zweiten Hinterschneidungen an Flächen am Gehäusedeckel bzw. am unteren Gehäuseteil eingreifen, wobei die Flächen am Gehäusedeckel bzw. am unteren Gehäuseteil senkrecht zur Vorzugsachse A ausgerichtet sind.

Es ist aber auch möglich, dass die Zapfen senkrecht zur Vorzugsachse A verlaufend ausgerichtet sind und die Zapfen mit ersten Hinterschneidungen in Führungsausnehmungen mit zweiten Hinterschneidungen an Flächen am Gehäusedeckel bzw. am Gehäuseteil eingreifen, wobei die Flächen am Gehäusedeckel bzw. am unteren Gehäuseteil parallel zur Vorzugsachse A ausgerichtet sind.

Es ist möglich, die Zapfen als Winkelelemente auszubilden, die in Führungsausnehmungen mit entsprechend ausgebildeten zweiten Hinterschneidungen eingreifen. Die Zapfen können aber auch eine pilzförmige Grundform aufweisen, die in entsprechenden Führungsausnehmungen mit entsprechend ausgebildeten zweiten Hinterschneidungen eingreifen können. Andere Ausgestaltungen sind denkbar und für Bajonettverschlüsse aus dem Stand der Technik bekannt.

Nach einem weiteren bevorzugten Aspekt der vorliegenden Erfindung ist ein Führungshals am Gehäusedeckel vorgesehen, der in die durch den Wandabschnitt gebildete Ausnehmung im Außengehäuse derart eingreift, dass beim Aufsetzen des Gehäusedeckels dieser bereits gegen Verrutschen (in einer zur Vorzugsachse A senkrechten Richtung) festgelegt ist. Dabei kann der Führungshals kreisförmig umlaufend ausgebildet sein. Es ist aber auch möglich, den Führungshals nur segmentweise vorzusehen, um das angestrebte Ziel einer Vorfixierung des Gehäusedeckels zu erreichen.

Alternativ ist es natürlich auch denkbar, dass ein entsprechender Führungshals vom unteren Gehäuseteil nach oben in Richtung auf den Gehäusedeckel vorstehend vorgesehen ist und in eine entsprechende Ausnehmung im Gehäusedeckel eingreift.

Da über den Führungshals eine Vorfixierung erzielt werden soll, ist es weiterhin sinnvoll, wenn bei einem Zusammenführen von Gehäusedeckel und unterem Gehäuseteil der Führungshals zuerst in Kontakt mit dem gegenüberliegenden Teil (dem unteren Gehäuseteil oder dem Gehäusedeckel) kommt, so dass in einer bevorzugten Ausgestaltung vorgesehen ist, dass der Führungshals über die Zapfen vorsteht, wenn Führungshals und Zapfen entweder beide am unteren Gehäuseteil oder beide am Gehäusedeckel vorgesehen sind und weiterhin der Rand der Ausnehmung, in den der Führungshals eingreifen soll, auf einem Niveau mit der Fläche liegt, an der die Führungsausnehmungen ausgebildet sind.

Um eine möglichst stabile Verrastung zwischen Gehäusedeckel und unterem Gehäuseteil sicherstellen zu können, wird es bevorzugt, wenn die Zahl der Zapfen, die in entsprechende Führungsausnehmungen eingreifen, zwischen 4 und 5 beträgt.

In einer weiterhin bevorzugten Ausgestaltung weist der Gehäusedeckel an seiner dem unteren Gehäuseteil abgewandten Seite eine Handhabe auf, um den Deckel mit einem Drehmoment um die Vorzugsachse A beaufschlagen zu können.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen
- Figur 1: eine Schnittansicht durch eine erste Ausführungsform eines Joghurtbereiters nach der Erfindung entlang der Linie B-B in Figur 2.
- Figur 2: eine Draufsicht auf ein unteres Gehäuseteil eines Joghurtbereiters mit eingesetztem Innenbehältnis.
- Figur 3: eine abgewandelte Ausführungsform eines Joghurtbereiters in Schnittansicht.
- Figur 4: eine Draufsicht auf ein unteres Gehäuseteil des Joghurtbereiters nach Figur 3.
- Figur 5: eine nochmals abgewandelte Ausführungsform eines Joghurtbereiters in Schnittansicht.
- Figur 6: eine Draufsicht auf ein unteres Gehäuseteil des Joghurtbereiters nach Figur 7.
- Figur 7: eine gegenüber der Ausführungsform des Joghurtbereiters nach Figur 8 nochmals abgewandelte Ausführungsform.
- Figur 8: eine Draufsicht auf den Gehäusedeckel des Joghurtbereiters nach Figur 1.

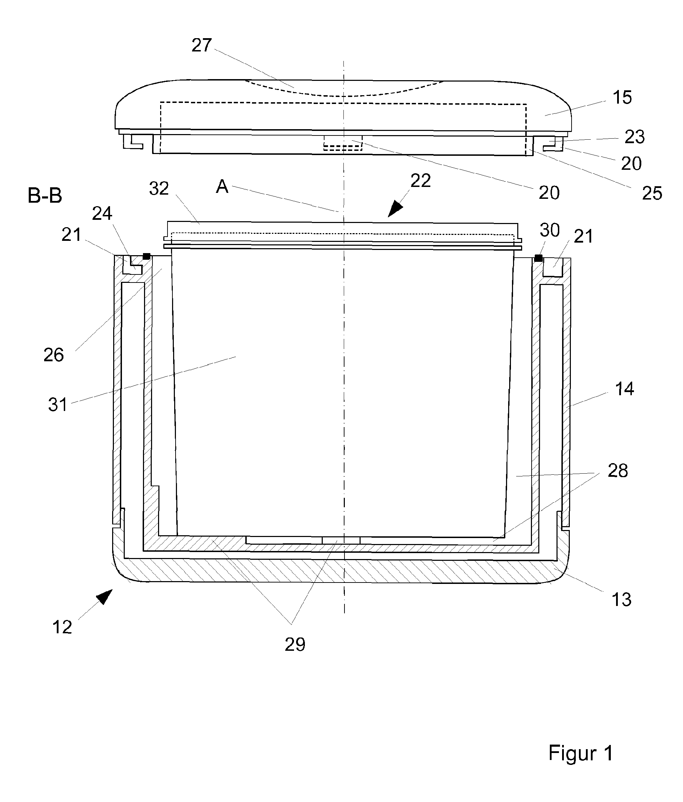

In Figur 1 ist eine erste Ausführungsform eines Joghurtbereiters in Schnittansicht dargestellt. Der Joghurtbereiter umfasst ein Außengehäuse 11, das aus zwei Grundelementen besteht, nämlich einem unteren Gehäuseteil 12 sowie einem Gehäusedeckel 15. Das untere Gehäuseteil 12 ist zu Isolationszwecken doppelwandig ausgebildet und weist einen Bodenabschnitt 13 sowie einen Wandabschnitt 14 auf. Innerhalb des unteren Gehäuseteils 12 ist ein Innenbehältnis 22 aufgenommen. Bei Verschließen des Gehäusedeckels 15 ist das Innenbehältnis 22 vollständig im Außengehäuse 11 des Joghurtbereiters aufgenommen. Zwischen Innenbehältnis 22 und dem Bodenabschnitt 13 bzw. dem Wandabschnitt 14 verbleibt ein freier Volumenbereich 28, in dem eine erwärmte bzw. erhitzte Flüssigkeit als Energiequelle aufgenommen werden kann.

Konkret werden zur Joghurtbereitung Milch und eine Pulvermischung, in der Joghurtkulturen enthalten sind, in vermengter Form im Innenbehältnis 22 aufgenommen. Erhitzte Flüssigkeit, beispielsweise zum Kochen erhitztes Wasser wird in den freien Volumenbereich 28 zwischen Innenbehältnis 22 und dem Wandabschnitt 14 bzw. dem Bodenabschnitt 13 des unteren Gehäuseteils 12 eingefüllt. Damit die erhitzte Flüssigkeit auch von unten, also zwischen Innenbehältnis 22 und Bodenabschnitt 13 an das Innenbehältnis 22 gelangen kann, sind am Bodenabschnitt 13 des unteren Gehäuseteils Auflagen 29 angeordnet, insbesondere angeformt, so dass die erhitzte Flüssigkeit in die Bereiche zwischen die Auflagen 29 eindringen kann und als Wärmequelle für die im Innenbehältnis 22 aufgenommene Flüssigkeitsmischung dient.

Die durch die erhitzte Flüssigkeit zwischen Innenbehältnis 22 und unterem Gehäuseteil 12 bereitgestellte Wärmeenergie soll über möglichst lange Zeit vorgehalten bzw. auf die im Innenbehältnis 22 aufgenommene Flüssigkeitsmischung übertragen werden, um dort die Ausbrütung der Keime und damit die Umsetzung der Milch in Joghurt zu bewirken. Um insofern Wärmeverluste an die Umgebung möglichst gering zu halten, ist das Außengehäuse 11 dicht verschließbar und mindestens über den Wandabschnitt 14, vorzugsweise über das gesamte untere Gehäuseteil 12, weiter vorzugsweise über unteres Gehäuseteil 12 und Gehäusedeckel 15 doppelwandig ausgebildet.

Erfindungsgemäß sind zwischen unterem Gehäuseteil 12 und Gehäusedeckel 15 Verschlussmittel wirksam, die bewirken, dass der Gehäusedeckel bei einer Beaufschlagung mit einer Zugkraft parallel zur Vorzugsachse A, die senkrecht zum Bodenabschnitt 13 des unteren Gehäuseteils 12 verläuft, geschlossen bleibt.

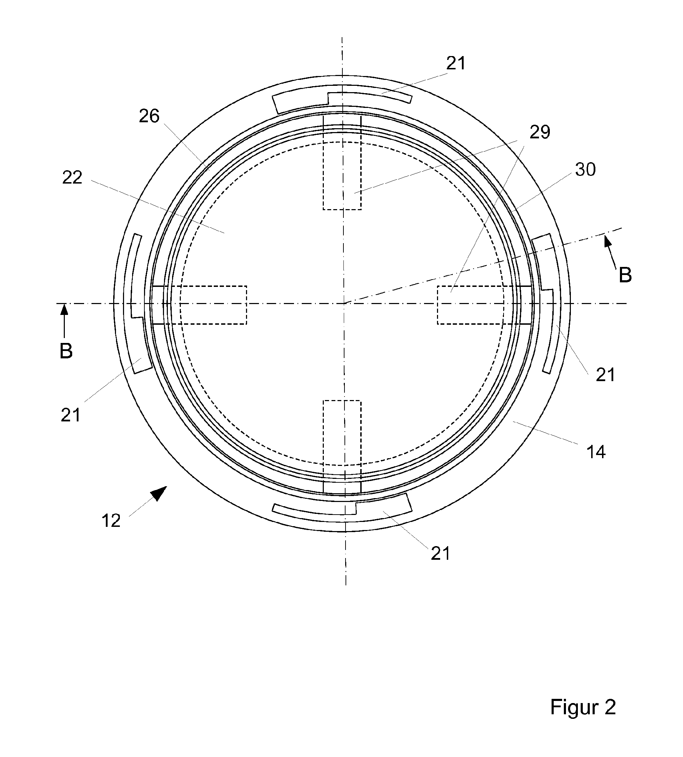

In einer konkreten, in den Figuren 1 und 2 veranschaulichten Ausführungsform ist zwischen Gehäusedeckel 15 und unterem Gehäuseabschnitt 12 ein Bajonettverschluss ausgebildet, wobei bei der hier konkret veranschaulichten Ausführungsform an einem stirnseitigen oberen Rand des Wandabschnitts 14 Führungsausnehmungen 21 ausgebildet sind. In diese Führungsausnehmungen 21 können korrespondierend ausgebildete, an einer Unterseite des Gehäusedeckels 15 angeordnete Zapfen eingreifen. Dazu sind die Zapfen mit ersten nach innen gerichteten Hinterschneidungen 23 ausgebildet, wohingegen die Führungsausnehmungen 21 zweite Hinterschneidungen 24 aufweisen, die korrespondierend zu den Zapfen 20 mit den Hinterschneidungen 23 ausgebildet und ausgerichtet sind. Um die Abdichtung zwischen unterem Gehäuseteil 12 und Gehäusedeckel 15 noch zu verbessern, kann schließlich noch eine umlaufende Dichtung 30 zwischen unterem Gehäuseteil 12 und Gehäusedeckel 15 wirksam sein, die beim Verschließen von Gehäusedeckel 15 und unterem Gehäuseteil 12 eine luftdichte Abdichtung bewirkt.

Um bereits eine Vorfixierung des Gehäusedeckels 15 auf den unteren Gehäuseteil 12 zu ermöglichen, ist der Gehäusedeckel noch mit einem Führungshals 25 versehen, der in die durch den Wandabschnitt 14 definierte Ausnehmung 16 eingreift und so den Gehäusedeckel 15 gegen seitliches Verrutschen vorfixiert.

Nur am Rande sei bemerkt, dass das Innenbehältnis 22 selbst zweiteilig ausgebildet sein kann, nämlich einen topfförmigen Grundkörper 31 sowie einen Deckel 32 aufweisen kann.

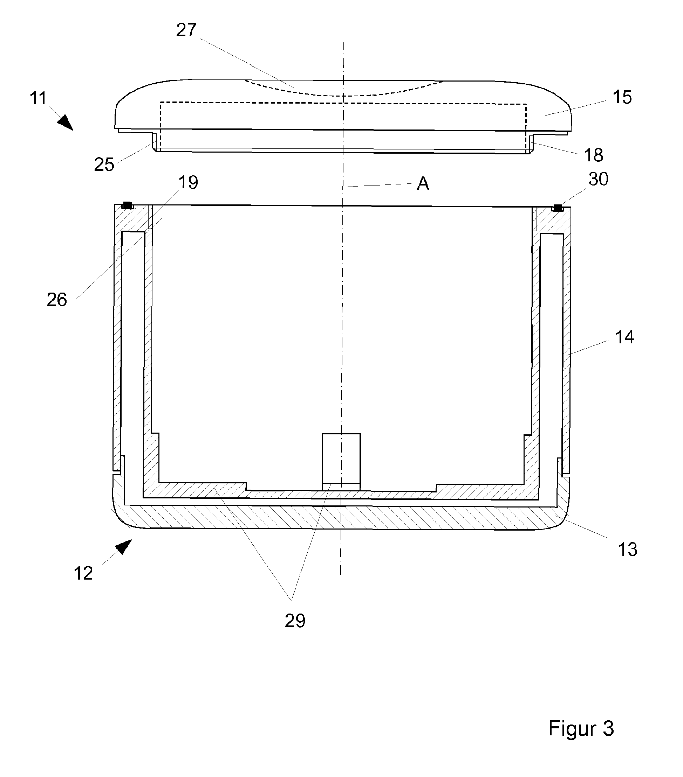

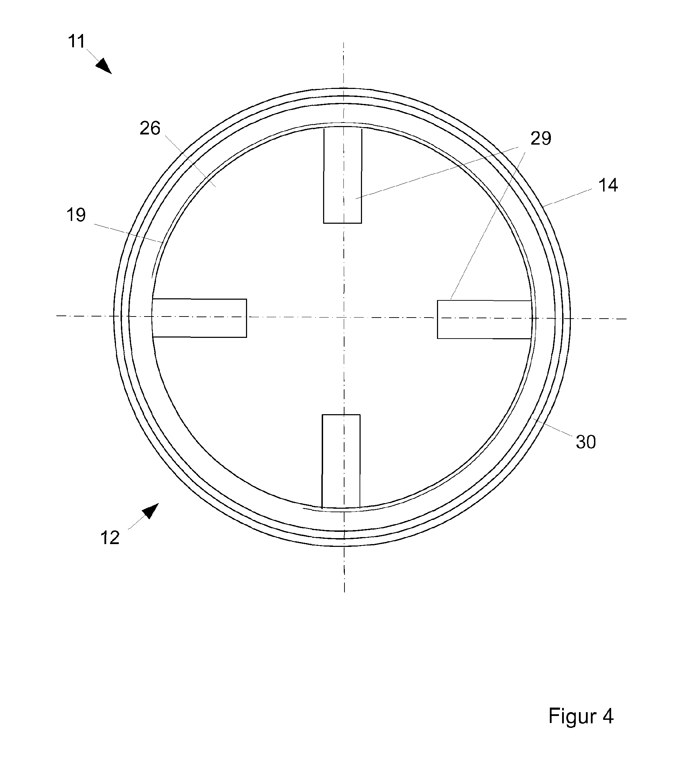

In den Figuren 3 und 4 ist eine abgewandelte Ausführungsform dargestellt, die sich hinsichtlich der Ausführungsform nach Figur 1 und 2 nur dahingehend unterscheidet, dass die Verschlussmittel, die einen einfachen, zuverlässigen und vergleichsweise wärmedichten Verschluss zwischen Gehäusedeckel und unterem Gehäuseteil 12 gestatten, alternativ ausgebildet sind.

Konkret weist der Gehäusedeckel 15 an seinem Führungshals 25 ein Außengewinde 18 auf. Das Außengewinde 18 korrespondiert mit einem am oberen Rand der Ausnehmung 26 am unteren Gehäuseteil 12 ausgebildeten Innengewinde 19, über das sich der Gehäusedeckel 15 auf das untere Gehäuseteil 12 aufschrauben lässt. Auch hier kann es in einer vorteilhaften Weiterbildung vorgesehen sein, dass eine umlaufende Dichtung 30 zwischen Gehäusedeckel 15 und unterem Gehäuseteil 12 wirksam ist. Diese umlaufende Dichtung 30 kann, wie im Übrigen schon bei der Ausführungsform nach den Figuren 1 und 2, wahlweise am Gehäusedeckel 15 oder am unteren Gehäuseteil 12 ausgebildet bzw. vorgesehen sein.

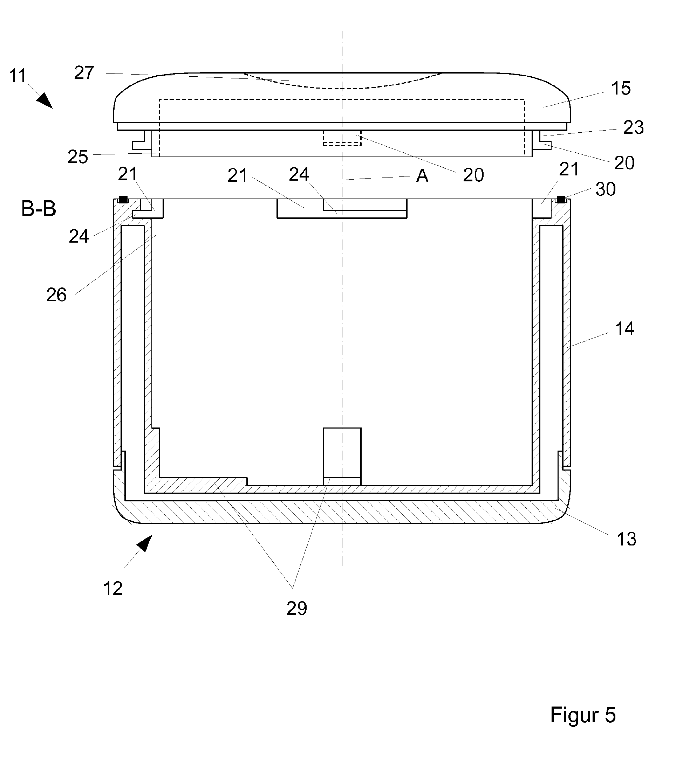

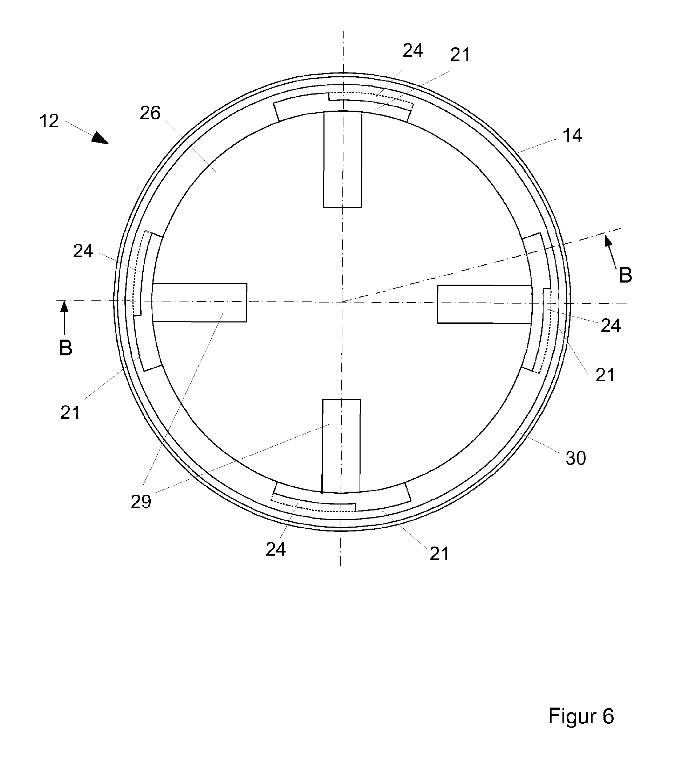

In den Figuren 5 und 6 ist eine nochmals abgewandelte Ausführungsform dargestellt, die sich hinsichtlich der Ausführungsform nach Figur 1 und 2 bzw. der Ausführungsform nach Figur 3 und 4 dahingehend unterscheidet, dass die Verschlussmittel, die einen einfachen, zuverlässigen und vergleichsweise wärmedichten Verschluss zwischen Gehäusedeckel 15 und unterem Gehäuseteil 12 gestatten, nochmals alternativ ausgestaltet sind. Auch hier ist, wie auch bei der Ausführungsform nach den Figuren 1 und 2, ein Bajonettverschluss vorgesehen. Allerdings greifen beim Bajonettverschluss nach den Figuren 5 und 6 Zapfen 20 mit ersten Hinterschneidungen 23 in Führungsausnehmungen 21 mit zweiten Hinterschneidungen 24 ein, die an der Innenseite des Wandabschnitts 14 und nicht an einer zum Bodenabschnitt 13 distalen Stirnseite des Wandabschnitts 14 ausgebildet sind.

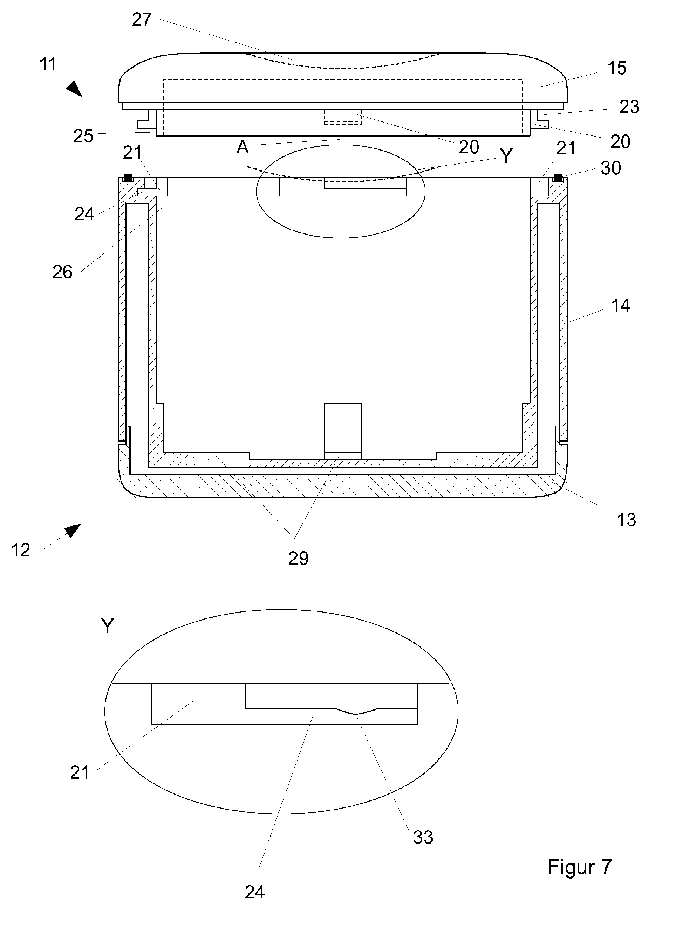

In Figur 7 ist noch ein Detail veranschaulicht, das bei einem Bajonettverschluss eine Rastposition ermöglicht. Hierfür kann eine Rastnase 33 an der zweite Hinterschneidungen 24 aufweisenden Führungsausnehmung 21 ausgebildet sein, derart, dass die mit ersten Hinterschneidungen 23 versehenen Zapfen 20 beim Verschließen des Gehäusedeckels 15 auf dem unteren Gehäuseteil 12 nach Eintreten in die Führungsausnehmung 21 über die Rastnase 33 geführt werden müssen und nach Überführung über die Rastnase 33 in einer Rastposition arretiert sind.

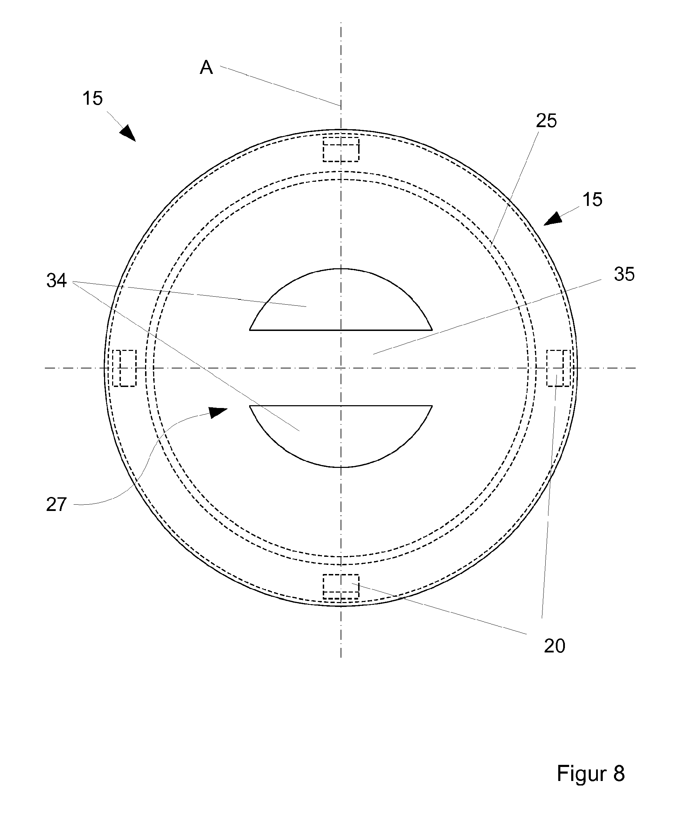

In Figur 8 ist noch eine Draufsicht auf den Gehäusedeckel 15 veranschaulicht, wie er insbesondere bei der Ausführungsform nach Figur 1 und 2, hinsichtlich der Verschlussmittel abgewandelt, aber auch bei den anderen vorbeschriebenen Ausführungsformen zur Anwendung kommen kann. Konkret ist eine Handhabe 27 an der Oberseite des Gehäusedeckels 15 eingearbeitet, die eine Übertragung von insbesondere manuell aufgebrachten Drehmomentkräften gestattet. Konkret kann die Handhabe 27, wie in Figur 8 veranschaulicht, zwei kreissegmentförmige Vertiefungen 34, die durch einen Mittelsteg 35 voneinander getrennt sind, umfassen.

Mit der vorliegenden Erfindung wird ein Joghurtbereiter vorgeschlagen, der auf einfache Weise eine sichere, zuverlässige und relativ gute wärmedichte Verschlussmöglichkeit gestattet. Der vorgeschlagene Joghurtbereiter ist somit einfach in der Handhabung und ermöglicht bei sachgerechter Handhabung, in einer hohen und gleichbleibenden Qualität Joghurt zu bereiten.

### Bezugszeichenliste

- 11: Außengehäuse
- 12: unteres Gehäuseteil
- 13: Bodenabschnitt
- 14: Wandabschnitt
- 15: Gehäusedeckel
- 18: Außengewinde
- 19: Innengewinde
- 20: Zapfen
- 21: Führungsausnehmung
- 22: Innenbehältnis
- 23: erste Hinterschneidungen
- 24: zweite Hinterschneidungen
- 25: Führungshals
- 26: Ausnehmung (Außengehäuse)
- 27: Handhabe
- 28: freier Volumenbereich
- 29: Auflagen
- 30: umlaufende Dichtung
- 31: topfförmiger Grundkörper (Innenbehältnis)
- 32: Deckel
- 33: Rastnase
- 34: Vertiefungen
- 35: Mittelsteg

## Patentansprüche

1. Joghurt-Bereiter umfassend
ein Außengehäuse (11) sowie ein darin aufnehmbares Innenbehältnis (22), wobei das Außengehäuse (11) ein zylindrisches, topfförmiges, unteres Gehäuseteil (12) mit einem Bodenabschnitt (13) und einem Wandabschnitt (14) sowie einen Gehäusedeckel (15) umfasst und eine durch die zylindrische Grundform des unteren Gehäuseteils (12) vorgegebene Vorzugsachse A definiert ist,
wobei das Außengehäuse (11) und/oder der Gehäusedeckel (15) zu Isolationszwecken doppelwandig ausgebildet sind und dass sowohl am unteren Gehäuseteil (12) als auch am Gehäusedeckel (15) korrespondierende Verschlussmittel (18, 19; 20, 21) angeordnet sind, die ein Festlegen bzw. Öffnen des Gehäusedeckels (15) derart gestatten, dass der Gehäusedeckel (15) bei einer Beaufschlagung mit einer Zugkraft parallel zur Vorzugsachse A geschlossen bleibt.

2. Joghurt-Bereiter nach Anspruch 1, **dadurch gekennzeichnet, dass** die Verschlussmittel ein Schraubgewinde ausbilden mit einem Außengewinde (18) am unteren Gehäuseteil (12) sowie einem Innengewinde (19) am Gehäusedeckel (15).

3. Joghurt-Bereiter nach Anspruch 1, **dadurch gekennzeichnet, dass** die Verschlussmittel ein Schraubgewinde ausbilden mit einem Außengewinde (18) am Gehäusedeckel (15) sowie einem Innengewinde (19) am unteren Gehäuseteil (12).

4. Joghurt-Bereiter nach Anspruch 1, **dadurch gekennzeichnet, dass** die Verschlussmittel einen Bajonettverschluss ausbilden mit Zapfen (20) am Gehäusedeckel (15), die in Führungsausnehmungen (21) am unteren Gehäuseteil (12) eingreift.

5. Joghurt-Bereiter nach Anspruch 1, **dadurch gekennzeichnet, dass** die Verschlussmittel einen Bajonettverschluss ausbilden mit Zapfen (20) am unteren Gehäuseteil (12), die in Führungsausnehmungen (21) am Gehäusedeckel (15) eingreifen.

6. Joghurt-Bereiter nach einem der Ansprüche 4 oder 5, **dadurch gekennzeichnet, dass** die Zapfen (20) parallel zur Vorzugsachse A verlaufend ausgerichtet sind und die Zapfen (20) mit ersten Hinterschneidungen (23) in Führungsausnehmungen (21) mit zweiten Hinterschneidungen (24) an Flächen am Gehäusedeckel (15) bzw. am unteren Gehäuseteil (12) angreifen, wobei die Flächen am Gehäusedeckel (15) bzw. am unteren Gehäuseteil (12) senkrecht zur Vorzugsachse A ausgerichtet sind.

7. Joghurt-Bereiter nach Anspruch 4 oder 5, **dadurch gekennzeichnet, dass** die Zapfen (20) senkrecht zur Vorzugsachse A verlaufend ausgerichtet sind und die Zapfen mit ersten Hinterschneidungen (23) in Führungsausnehmungen (21) mit zweiten Hinterschneidungen (24) an Flächen am Gehäusedeckel (15) bzw. am unteren Gehäuseteil (12) eingreifen, wobei die Flächen am Gehäusedeckel (15) bzw. am unteren Gehäuseteil (12) parallel zur Vorzugsachse A ausgerichtet sind.

8. Joghurt-Bereiter nach einem der Ansprüche 4 bis 7, **dadurch gekennzeichnet, dass** die Zapfen (20) als Winkelelemente ausgebildet sind, die in Führungsausnehmungen (21) mit entsprechend ausgebildeten zweiten Hinterschneidungen (24) eingreifen.

9. Joghurt-Bereiter nach einem der Ansprüche 1 bis 8, **dadurch gekennzeichnet, dass** ein Führungshals (25) am Gehäusedeckel (15) in die durch den Wandabschnitt (14) gebildete Ausnehmung (26) im Außengehäuse (11) eingreift derart, dass beim Aufsetzen des Gehäusedeckels (15) dieser bereits gegen Verrutschen (in einer zur Vorzugsachse A senkrechten Richtung) festgelegt ist.

10. Joghurt-Bereiter nach Anspruch 9, **dadurch gekennzeichnet, dass** der Führungshals (25) über die Zapfen (20) vorsteht.

11. Joghurt-Bereiter nach einem der Ansprüche 4 bis 10, **dadurch gekennzeichnet, dass** die Zahl der Zapfen (20), die in entsprechende Führungsausnehmungen (21) eingreifen, zwischen 4 und 5 beträgt.

12. Joghurt-Bereiter nach einem der Ansprüche 1 bis 11, **dadurch gekennzeichnet, dass** der Gehäusedeckel (15) an seiner dem unteren Gehäuseteil (12) abgewandten Seite eine Handhabe (27) aufweist, um den Deckel mit einem Drehmoment um die Vorzugsachse A beaufschlagen zu können.
